# EUROPEAN PATENT SPECIFICATION

(11) **EP 0 448 918 B1**
(45) Date of publication and mention of the grant of the patent: **08.06.1994**
(21) Application number: 90830520.4
(22) Date of filing: 13.11.1990
(51) Int. Cl.: G01B 11/28

(54) **Method for checking the surface geometry of an object, particularly an embossed object**
Verfahren für die Prüfung der Oberflächengeometrie eines Objektes, insbesondere eines geprägten Objektes
Méthode pour le contrôle de la géométrie de la surface d'un objet, particulièrement, un objet bossele

(30) Priority: 20.12.1989 IT 6813989
(43) Date of publication of application: 02.10.1991
(73) Proprietor: FIAT AUTO S.p.A., 10135 Torino (IT)
(72) Inventor: Iulita, Piero, I-10137 Torino (IT)
(74) Representative: Bosotti, Luciano

(56) References cited:
- DE-A- 3 134 264
- DE-C- 904 353
- GB-A- 2 115 142
- PATENT ABSTRACTS OF JAPAN, vol. 10, no. 41 (P-429)[2098], 18th February 1986; & JP-A-60 187 806

## Description

The present invention relates in general to the problem of checking the typology of the surface geometry of objects, particularly embossed objects.
It is known from JP-A-60 187-806 to discriminate the boundary with a dissimilar metal material in a clad material, by forming a scratch in a definite direction in a part of the boundary between a base material and a dissimilar metal, by applying beams of light to this part, and by detecting the intensity of the light reflected by said part.

It is known from DE-C-904 353 a method for checking the quality of surfaces by means of optical interference of beams of monochromatic light in a liquid medium.

The invention has been developed with particular attention to its possible use for checking the degree of surface finishing of elements of plastics material for the internal panels of motor vehicles. These objects generally have embossed surfaces, the degree of embossing being classified by the producer or the user by predetermined marks. The conformity between the surface appearance and the mark is checked visually by comparison with reference samples.

This method has the disadvantage that the geometry of the embossing is not detected objectively by the measurement of repeatable parameters and the allocation to each of numerical values which describe its surface characteristics.

Currently, as stated, the discrimination and recognition of the various embossed patterns is based on comparison with reference samples.

This solution has three basic disadvantages:
- it involves a subjective perceptive detection which depends on the attention, the sensitivity and the judgement of the person carrying out the check,
- small differences in geometry may easily escape visual detection and this can make the correct classification imprecise, and
- reference samples (standards) must be available in order to make the comparison.

The object of the present invention is to provide means which enable the aforementioned check to be made without giving rise to the problems cited above, and which make it possible for the checking and classification to be completely objective and not affected by the attitudes of the person carrying out the check.

According to the present invention, the problem is resolved by virtue of a method having the characteristics claimed specifically in the claims which follow.

A further subject of the invention is a device for carrying out the method.

The invention will now be described, purely by way of non-limiting example, with reference to the appended drawings, in which:
Figure 1 is a sectional view of an object undergoing a checking operation carried out in accordance with the invention, and
Figure 2 shows the general structure of the device according to the invention.

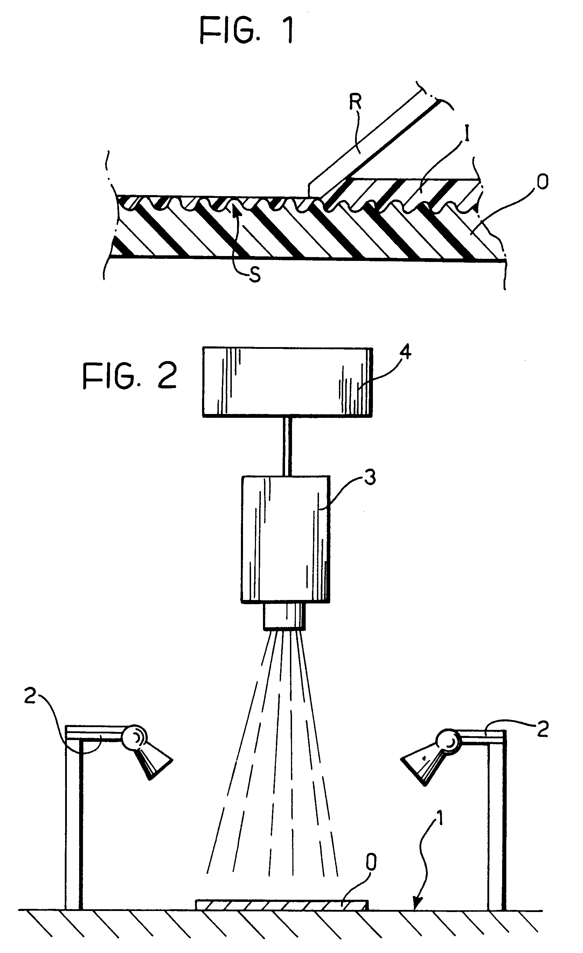

In Figure 1, an object, generally indicated 0, has a generally rough (embossed) surface S. For example, this may be an internal panelling element of plastics material (polyurethane, etc.) for motor vehicles.

Essentially, the embossed surface S has a more or less regular pattern constituted by small raised portions and small depressions of different areas, shapes and densities. These geometric characteristics can be quantified respectively by means of parameters such as their average area, the shape and/or density factor of the raised portions (number/cm²), the total percentage area occupied by the raised portions, and the average perimeter of the raised portions.

Naturally, these are parameters which cannot be quantified precisely according to the prior art based on a visual analysis.

The solution according to the invention is based principally on the processing of a digital image (by known techniques) and its discrimination on the basis of its degrees of greyness (black/white).

In order to carry out an analysis of this type, however, it must be possible to reduce the appearance of the embossed surface S of the object 0 to an essentially two-dimensional morphology in which different degrees of greyness (white/black) correspond to the raised portions and the depressions of the embossing.

For this purpose, in the method according to the invention, the surface S whose degree of embossing is to be checked is first "inked" by the application thereto of a layer of a coloured medium I (liquid, paste, etc...) which acts as an ink. For example, this may be a normal typographical ink (or a paint) of a colour which contrasts with the colour of the object 0. For example, if the object 0 is a polyurethane panelling element (of a generally dark colour), an ink I of a light colour, for example white, may be selected.

After it has been deposited on the surface S, the ink I is partially removed, for example, by means of a blade or brush R, or by a sheet of absorbent paper which is wiped over the object 0 so as to remove the excess ink I situated above the upper contours of the surface S. The ink thus remains mainly in the depressions and gives rise to a substantially two-dimensional surface morphology composed of light-coloured areas corresponding to the depressions which contrast with the dark-coloured areas corresponding to the raised portions from which the ink I has substantially been removed.

The object 0 thus prepared can be analysed in a device of the type illustrated in Figure 2.

The device in question comprises essentially:
- a supporting surface 1 on which the object 0, previously inked, is placed,
- a set of lamps 2 which illuminate the object 0 so as to avoid shadows,
- a video camera 3, preferably of the high-definition type, arranged in a position such that it creates an image of the object 0 and generates a video signal (usually in digital form) corresponding to the surface morphology (the degree of greyness) of the inked object 0, and
- an image analyser device for receiving the signal provided by the video camera 3 in order to process it, and for carrying out any preliminary sharpening of the definition (image enhancement).

In particular, before the discrimination of the light/dark areas, the image analyser (which is of known type: for example, the image analyser sold under the mark IBAS by the company KONTRON) can carry out an erosion and subsequent enlargement of the image (in order to separate one raised portion from another physically before the measurements) and then an automatic discrimination with predetermined constant analysis thresholds (in order to reduce the interaction with the system and make the measurements quicker).

For a statistically valid discrimination, the image analyser may operate over a sample surface of the order of 60 by 60 mm²; the dimensions of this area may be varied, however, according to operating requirements.

The image analyser can calculate, on the basis of known algorithms, the parameters relating to the raised portions of the embossed surface S: for example, these may be the average area of the crests of the raised portions, their shape factor, and the number of raised portions/cm. In addition to these parameters, it is also possible to detect the percentage area and the average perimeter of the raised portions.

For example, these parameters, measured by the method according to the invention, assumed the following values for an embossed surface referred to by the Applicant as MT 2521:
- % area 53.50%
- average area = 1.36 mm²
- average perimeter = 5.38 mm
- average shape factor = 0.56
- number of raised portions/cm² = 43

The parameters in question relate to the raised portions of the embossing.

## Claims

1. A method for checking the surface geometry of an object (0) which has a surface distribution (S) of depressions and raised portions, characterised in that it comprises the steps of:
- applying to the surface (S) a medium (I) which acts as an ink so that the medium (I) fills the depressions and leaves the raised portions substantially free, the medium (I) having a colour which contrasts generally with that of the object (O) so that, after the application of the medium (I), the object (O) has a substantially two-dimensional surface morphology of areas of contrasting colours corresponding to the depressions and to the raised portions, respectively, and
- subjecting the substantially two-dimensional surface morphology to image analysis (3, 4) so as to detect the geometric characteristics of the depressions and the raised portions.

2. A method according to Claim 1, characterised in that, after the medium (I) which acts as an ink has been deposited on the surface (S), it is at least partially removed by scraping (R) or wiping of the surface.

3. A method according to Claim 1 or Claim 2, characterised in that the substantially two-dimensional surface morphology is subjected to image analysis in order to check at least one of the following parameters:
- the average area of the raised portions,
- the shape factor of the raised portions,
- the surface density of the raised portions,
- the total or percentage area of the raised portions, and
- the average perimeter of the raised portions.

## Patentansprüche

1. Verfahren zum Überprüfen der Oberflächengeometrie eines Gegenstands (O), welcher eine Oberflächenverteilung (S) von Einsenkungen und erhöhten Bereichen aufweist,
dadurch gekennzeichnet,
daß es die Schritte umfaßt:
- Auftragen eines als Farbstoff wirkenden Mediums (I) auf die Oberfläche (S) derart, daß das Medium (I) die Einsenkungen füllt und die erhöhten Bereiche im wesentlichen freiläßt, wobei das Medium (I) eine Farbe aufweist, die im allgemeinen zu derjenigen des Gegenstands (O) einen Kontrast bildet, so daß nach dem Auftragen des Mediums (I) der Gegenstand (O) eine im wesentlichen zweidimensionale Oberflächenmorphologie mit Bereichen von kontrastierenden Farben aufweist, welche den Einsenkungen bzw. den erhöhten Bereichen entsprechen, und
- Unterziehen der im wesentlichen zweidimensionalen Oberflächenmorphologie einer Bildanalyse (3, 4), um die geometrischen Charakteristiken der Einsenkungen und der erhöhten Bereiche zu erfassen.

2. Verfahren nach Anspruch 1,
dadurch gekennzeichnet,
daß nachdem das als Farbstoff wirkende Medium (I) auf der Oberfläche (S) abgelagert worden ist, dieses wenigstens teilweise durch Abkratzen (R) oder Abwischen der Oberfläche entfernt wird.

3. Verfahren nach Anspruch 1 oder Anspruch 2,
dadurch gekennzeichnet,
daß die im wesentlichen zweidimensionale Oberflächenmorphologie einer Bildanalyse unterzogen wird, um wenigstens einen der folgenden Parameter zu überprüfen:
- die durchschnittliche Fläche der erhöhten Bereiche,
- den Formfaktor der erhöhten Bereiche,
- die Oberflächendichte der erhöhten Bereiche,
- die Gesamt- oder Prozentualfläche der erhöhten Bereiche, und
- den durchschnittlichen Umfang der erhöhten Bereiche.

## Revendications

1. Procédé pour vérifier la géométrie de surface d'un objet (O) qui présente une distribution en surface (S) de dépressions et de parties en saillie, caractérisé en ce qu'il comprend les étapes consistant à :
- appliquer sur la surface (S) un milieu (I) qui agit à la manière d'une encre de telle sorte que le milieu (I) remplit les dépressions et laisse les parties en saillie sensiblement libres, le milieu (I) ayant une couleur qui contraste généralement avec celle de l'objet (O) de telle sorte qu'après application du milieu (I), l'objet (O) présente une morphologie de surface sensiblement bi-dimensionnelle de zones de couleurs contrastées qui correspondent respectivement aux dépressions et aux parties en saillie, et
- soumettre la morphologie de surface sensiblement bidimensionnelle à une analyse d'images (3, 4) de manière à détecter les caractéristiques géométriques des dépressions et des parties en saillie.

2. Procédé selon la revendication 1, caractérisé en ce que, après avoir déposé sur la surface (S) le milieu (I) qui agit à la manière d'une encre, on l'enlève au moins partiellement par raclage (R) ou essuyage de la surface.

3. Procédé selon l'une ou l'autre des revendications 1 et 2, caractérisé en ce que la morphologie de surface sensiblement bi-dimensionnelle est soumise à une analyse d'images afin de vérifier au moins l'un des paramètres suivants :
- la surface moyenne des parties en saillie,
- le facteur de forme des parties en saillie,
- la densité de surface des parties en saillie,
- la surface totale ou la surface en pourcentage des parties en saillie, et
- le périmètre moyen des parties en saillie.
